# FASCICULE DE BREVET EUROPEEN

(11) **EP 0 542 167 B1**
(45) Date de publication et mention de la délivrance du brevet: **13.09.1995**
(21) Numéro de dépôt: 92119142.5
(22) Date de dépôt: 09.11.1992
(51) Int. Cl.: F01M 1/18, F16C 17/20, F16C 17/24, F16N 29/00

(54) **Dispositif de détection des conditions de grippage des paliers d'une machine alternative**
Einrichtung zur Bestimmung der Festlaufzustände der Lager einer Hubkolbenmaschine
Device for detecting seizure conditions of reciprocating-piston machine bearings

(30) Priorité: 14.11.1991 FR 9114006
(43) Date de publication de la demande: 19.05.1993
(73) Titulaire: S.E.M.T. Pielstick, 93200 Saint Denis (FR)
(72) Inventeur: Bousseau, Pierre, F-92170 Vanves (FR)
(74) Mandataire: Weinmiller, Jürgen

(56) Documents cités:
- EP-A- 0 199 069
- EP-A- 0 418 161
- CH-A- 223 841
- US-A- 4 095 552

## Description

L'invention concerne un dispositif assurant la détection de la dégradation des conditions de lubrification des paliers d'une machine alternative. Elle concerne en particulier la détection de la dégradation des conditions de lubrification des paliers lisses de liaison entre bielle et vilebrequin et entre vilebrequin et bâti d'un moteur à combustion interne.

Le graissage des paliers lisses d'un moteur à combustion interne est assuré par de l'huile dont la pression, la température, la granulométrie des impuretés éventuelles et la teneur en eau à l'entrée du moteur sont contrôlées au cours du fonctionnement.

La détérioration intempestive d'un ou de plusieurs de ces paramètres peut entraîner la disparition locale du film d'huile séparant normalement le palier de son coussinet. Le contact métal sur métal qui en résulte entraîne, dans les conditions de vitesse relative et de pression unitaire régnant dans un moteur, la soudure locale des métaux du palier et du coussinet conduisant, sous un délai variable suivant l'affaiblissement du film d'huile, à la détérioration permanente du palier appelée grippage.

On connaît divers dispositifs destinés à alerter le conducteur du moteur de l'amorce des phénomènes de grippage. Le coussinet ou son environnement immédiat peut être équipé d'un capteur de température (voir par exemple le document EP-A-0 199 069), opération qui peut être rendue difficile dans le cas des paliers de tête de bielle. L'élévation soudaine et rapide de la température du coussinet rend compte d'un échauffement anormal des parties frottantes dont la cause est à priori le grippage.

L'inconvénient de ces dispositifs qui surveillent les paliers du moteur à combustion interne réside dans le fait qu'ils ne sont pas préventifs puisqu'il faut que le grippage soit amorcé pour être détecté. En fait, ils sont seulement destinés à limiter l'importance de la détérioration en permettant une intevention rapide du conducteur du moteur.

Le document EP-A-0 418 161 envisage de détecter préventivement le grippage en ajoutant dans l'huile de lubrification un corps subissant une modification à une température nettement supérieure à la température normale du fluide dans le palier mais inférieure à la température atteinte localement en cas d'amorce de grippage.

On propose, selon la présente invention, de remédier à ce problème grâce à un dispositif assurant effectivement la détection préventive des conditions de grippage des paliers d'une machine alternative et en particulier des paliers d'un moteur à combustion interne.

L'invention a donc pour objet un dispositif de détection de la dégradation des conditions de lubrification des paliers lisses de liaison entre bielle et vilebrequin et entre vilebrequin et bâti d'une machine alternative en fonctionnement, la lubrification étant assurée par circulation d'huile, le dispositif comprenant des moyens de détection du phénomène de grippage, le dispositif étant caractérisé en ce qu'il comprend un palier supplémentaire servant de palier témoin, ce palier témoin étant lubrifié par circulation de la même huile que celle des autres paliers et supportant un arbre tournant chargé radialement, lesdits moyens de détection équipant le palier témoin qui possède également des moyens permettant de lui conférer une plus grande sensibilité que les autres paliers à la dégradation des conditions de lubrification.

Selon une caractéristique préférentielle de l'invention, le dispositif est caractérisé en ce que lesdits moyens conférant une plus grande sensibilité au palier témoin sont tels que la vitesse tangentielle relative entre la surface dudit arbre tournant et celle du palier témoin est supérieure ou égale à celle qui existe dans chacun des paliers à surveiller, en ce que le jeu relatif entre ledit arbre et le palier témoin est plus grand ou égal au jeu relatif existant dans chacun des paliers à surveiller et en ce que la pression spécifique de l'arbre sur le palier témoin est inférieure ou égale à la pression spécifique correspondante régnant dans chacun des paliers à surveiller.

Le palier témoin et son arbre tournant peuvent être situés dans la même enceinte de la machine que les paliers à surveiller, l'arbre du palier témoin étant entraîné par la machine alternative.

Le palier témoin et son arbre tournant peuvent être situés en dehors de l'enceinte de la machine contenant les paliers à surveiller, l'arbre du palier témoin étant entraîné par une machine distincte de la machine alternative.

La charge radiale appliquée au palier témoin peut être constante en direction, en sens et en intensité, quelle que soit la charge de la machine alternative.

La charge radiale appliquée au palier témoin peut également être variable et être une fonction directe de la charge de la machine alternative.

Il est avantageux que le signal délivré par les moyens de détection soit comparé à une valeur de consigne pour déclencher un signal d'alarme lorsque le signal délivré par les moyens de détection atteint la valeur de consigne.

Les moyens de détection peuvent comprendre un capteur de température.

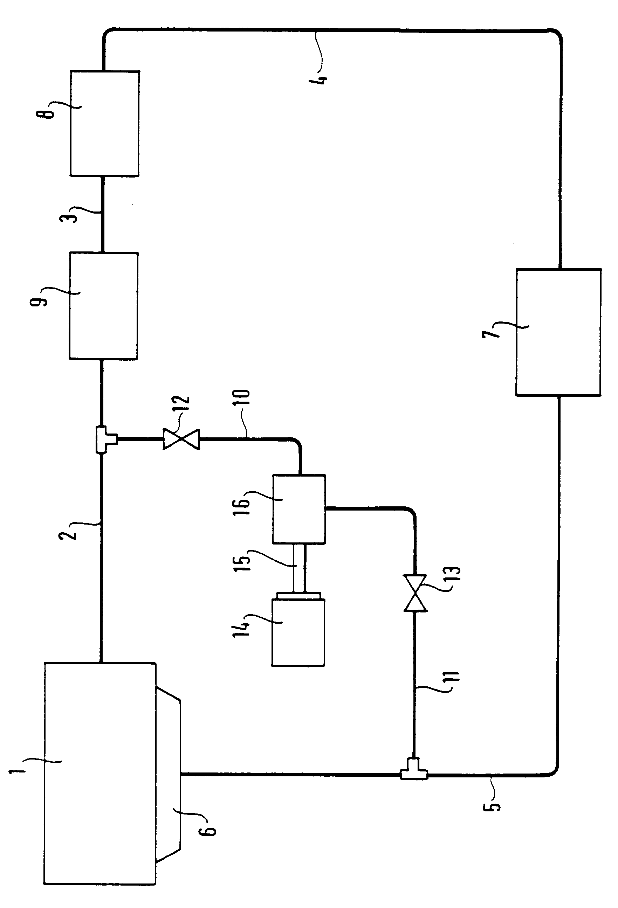

L'invention sera mieux comprise et d'autres avantages et particularités apparaîtront à la lecture de la description qui va suivre, donnée à titre non limitatif, accompagnée de la figure annexée qui représente, de façon synoptique, un moteur à combustion interne équipé du dispositif de détection selon l'invention.

La figure annexée illustre le cas où la machine alternative est un moteur à combustion interne, le palier témoin et son arbre tournant étant situés en dehors de l'enceinte du moteur contenant les paliers à surveiller.

Le graissage des paliers lisses du moteur à combustion interne 1 est assuré par une circulation d'huile, l'huile étant traitée à l'extérieur des moteurs. Des conduites 2, 3, 4 et 5 assurent cette circulation à l'extérieur du moteur. L'huile est extraite du carter 6 du moteur, passe dans un réfrigérant 7 puis, par l'intermédiaire de la pompe 8, dans un filtre 9 pour être à nouveau injectée dans les paliers lisses du moteur 1. Ceci constitue le circuit normal de graissage des paliers lisses d'un moteur à combustion interne.

Sur ce circuit normal de graissage est prévu un circuit dérivé grâce aux conduites 10 et 11. Ce circuit dérivé est branché entre l'entrée d'huile au moteur 1 et sa sortie d'huile. Il peut être isolé en cas de besoin du circuit normal par des vannes 12 et 13.

Un moteur auxiliaire 14 entraîne un arbre 15 supporté par le palier témoins 16. Ce palier témoin est lubrifié par l'huile circulant dans le circuit de dérivation et traitée dans le circuit normal de graissage.

Le palier témoin ayant une plus grande sensibilité que les autres paliers à la dégradation des conditions de lubrification, il signalera préventivement la survenue de conditions de grippage des paliers du moteur.

De manière connue en soi, le palier témoin peut être équipé d'un système de détection du phénomène de grippage, comprenant par exemple un capteur de température délivrant un signal que l'on compare à une valeur de consigne pour déclencher un signal d'alarme lorsque le signal délivré par le capteur atteint la valeur de consigne.

## Revendications

1. Dispositif de détection de la dégradation des conditions de lubrification des paliers lisses de liaison entre bielle et vilebrequin et entre vilebrequin et bâti d'une machine alternative en fonctionnement (1), la lubrification étant assurée par circulation d'huile, le dispositif comprenant des moyens de détection du phénomène de grippage, le dispositif étant caractérisé en ce qu'il comprend un palier supplémentaire servant de palier témoin (16), ce palier témoin étant lubrifié par circulation de la même huile que celle des autres paliers et supportant un arbre tournant (15) chargé radialement, lesdits moyens de détection équipant le palier témoin qui possède également des moyens permettant de lui conférer une plus grande sensibilité que les autres paliers à la dégradation des conditions de lubrification.

2. Dispositif selon la revendication 1, caractérisé en ce que lesdits moyens conférant une plus grande sensibilité au palier témoin sont tels que la vitesse tangentielle relative entre la surface dudit arbre tournant et celle du palier témoin est supérieure ou égale à celle qui existe dans chacun des paliers à surveiller, en ce que le jeu relatif entre ledit arbre (15) et le palier témoin (16) est plus grand ou égal au jeu relatif existant dans chacun des paliers à surveiller et en ce que la pression spécifique de l'arbre sur le palier témoin est inférieure ou égale à la pression spécifique correspondante régnant dans chacun des paliers à surveiller.

3. Dispositif selon l'une des revendications 1 ou 2, caractérisé en ce que la palier témoin et son arbre tournant sont situés dans la même enceinte de la machine que les paliers à surveiller, l'arbre du palier témoin étant entraîné par la machine alternative.

4. Dispositif selon l'une des revendications 1 ou 2, caractérisé en ce que le palier témoin (16) et son arbre tournant (15) sont situés en dehors de l'enceinte de la machine (1) contenant les paliers à surveiller, l'arbre du palier témoin étant entraîné par une machine (14) distincte de la machine alternative.

5. Dispositif selon l'une quelconque des revendications 1 à 4, caractérisé en ce que la charge radiale appliquée au palier témoin est constante en direction, en sens et en intensité, quelle que soit la charge de la machine alternative.

6. Dispositif selon l'une quelconque des revendications 1 à 4, caractérisé en ce que la charge radiale appliquée au palier témoin est variable et est une fonction directe de la charge de la machine alternative.

7. Dispositif selon l'une quelconque des revendications 1 à 6, caractérisé en ce que les moyens de détection délivrent un signal qui est comparé à une valeur de consigne pour déclencher un signal d'alarme lorsque le signal délivré par les moyens de détection atteint la valeur de consigne.

8. Dispositif selon l'une quelconque des revendications précédentes, caractérisé en ce que lesdits moyens de détection comprennent un capteur de température.

## Claims

1. Apparatus for detecting degradation of the lubrication conditions of smooth bearings connecting a crank shaft to a connecting rod or connecting the crank shaft to the body of a machine (1) that reciprocates in operation, lubrication being provided by oil circulation, the apparatus including means for detecting the phenomenon of seizure, the apparatus being characterized in that it comprises an additional bearing serving as a test bearing (16), said test bearing being lubricated by circulation of the same oil as is used for the other bearings and supporting a radially-loaded rotating shaft (15), said detection means being fitted to the test bearing which also includes means enabling it to be more sensitive than the other bearings to degraded lubrication conditions.

2. Apparatus according to claim 1, characterized in that said means enabling the test bearing to be more sensitive are such that the relative tangential speed between the surface of said rotary shaft and the surface of said test bearing is greater than or equal to the speed which exists in each of the bearings to be monitored, in that the relative clearance between said shaft (15) and the reference bearing (16) is greater than or equal to the relative clearance existing in each of the bearings to be monitored, and in that the design oil pressure of the shaft on the test bearing is less than or equal to the corresponding pressure in each of the bearings to be monitored.

3. Apparatus according to claim 1 or 2, characterized in that the test bearing and its rotary shaft are situated in the same machine enclosure as the bearings to be monitored, the shaft of the test bearing being driven by the reciprocating machine.

4. Apparatus according to claim 1 or 2, characterized in that the test bearing (16) and its rotary shaft (15) are situated outside the enclosure of the machine (1) containing the bearings to be monitored, the shaft of the test bearing being driven by a machine (14) which is distinct from the reciprocating machine.

5. Apparatus according to any one of claims 1 to 4, characterized in that the radial load applied to the test bearing is constant in direction, in sense, and in intensity, regardless of the load on the reciprocating machine.

6. Apparatus according to any one of claims 1 to 4, characterized in that the radial load applied to the test bearing varies and is a direct function of the load on the reciprocating machine.

7. Apparatus according to any one of claims 1 to 6, characterized in that the detection means deliver a signal which is compared with a reference value to trigger an alarm signal when the signal delivered by the detection means reaches the reference value.

8. Apparatus according to any preceding claim, characterized in that said detection means comprise a temperature sensor.

## Patentansprüche

1. Vorrichtung zur Erfassung der Verschlechterung der Schmierbedingungen der glatten Verbindungslager zwischen der Kurbelstange und der Kurbelwelle und zwischen der Kurbelwelle und dem Gestell eines laufenden Kolbenmotors (1), wobei die Schmierung durch einen Ölkreislauf gewährleistet wird und die Vorrichtung Mittel zur Erfassung der Festfreßerscheinung aufweist, dadurch gekennzeichnet, daß sie ein zusätzliches Lager aufweist, das als Vergleichslager (16) dient, wobei dieses Vergleichslager durch Zirkulation des gleichen Öls wie des der anderen Lager geschmiert wird und eine radial belastete drehende Welle (15) aufweist, wobei die Erfassungsmittel am Vergleichslager angreifen, das zusätzlich Mittel aufweist, die es erlauben, ihm eine größere Empfindlichkeit als die anderen Lager für die Verschlechterung der Schmierbedingungen zu verleihen.

2. Vorrichtung nach Anspruch 1, dadurch gekennzeichnet, daß die dem Vergleichslager eine größere Empfindlichkeit verleihenden Mittel derart sind, daß die relative Tangentialgeschwindigkeit zwischen der Oberfläche der drehenden Welle und der des Vergleichslagers mindestens gleich der ist, die in jedem zu überwachenden Lager vorliegt, daß das relative Spiel zwischen der Welle (15) und dem Vergleichslager (16) mindestens gleich dem relativen Spiel in jedem der zu überwachenden Lager ist und daß der spezifische Druck der Welle auf das Vergleichslager höchstens gleich dem entsprechenden spezifischen Druck ist, der in jedem der zu überwachenden Lager herrscht.

3. Vorrichtung nach einem der Ansprüche 1 oder 2, dadurch gekennzeichnet, daß das Vergleichslager und seine drehende Welle sich in dem gleichen Raum der Maschine befinden wie die zu überwachenden Lager, wobei die Welle des Vergleichslagers von der Kolbenmaschine angetrieben wird.

4. Vorrichtung nach einem der Ansprüche 1 oder 2, dadurch gekennzeichnet, daß das Vergleichslager (16) und seine drehende Welle (15) sich außerhalb des die zu überwachenden Lager enthaltenden Raums der Maschine (1) befinden, wobei die Welle des Vergleichslagers von einer anderen Maschine (14) als der Kolbenmaschine angetrieben wird.

5. Vorrichtung nach einem beliebigen der Ansprüche 1 bis 4, dadurch gekennzeichnet, daß die auf das Vergleichslager angelegte radiale Last nach Richtung und Intensität konstant ist, unabhängig von der Last der Kolbenmaschine.

6. Vorrichtung nach einem beliebigen der Ansprüche 1 bis 4, dadurch gekennzeichnet, daß die am Vergleichslager wirksame radiale Last variabel und eine direkte Funktion der Last der Kolbenmaschine ist.

7. Vorrichtung nach einem beliebigen der Ansprüche 1 bis 6, dadurch gekennzeichnet, daß die Erfassungsmittel ein Signal liefern, das mit einem Schwellwert verglichen wird, um ein Alarmsignal auszulösen, wenn das von den Erfassungsmitteln gelieferte Signal den Schwellwert erreicht.

8. Vorrichtung nach einem beliebigen der vorhergehenden Ansprüche, dadurch gekennzeichnet, daß die Erfassungsmittel eine Temperatursonde enthalten.
